# EUROPEAN PATENT SPECIFICATION

(11) **EP 1 476 061 B1**
(45) Date of publication and mention of the grant of the patent: **11.05.2005**
(21) Application number: 03704341.1
(22) Date of filing: 20.02.2003
(51) Int. Cl.: A47J 31/46, A47J 31/60, A47J 31/40

(54) **A DEVICE FOR DISPENSING WATER IN PORTIONS**
VORRICHTUNG ZUM SPENDEN VON WASSER IN PORTIONEN
DISPOSITIF DE DISTRIBUTION D'EAU EN PORTIONS

(30) Priority: 20.02.2002 DK 200200264
(43) Date of publication of application: 17.11.2004
(73) Proprietor: WITTENBORG A/S, DK-5000 Odense C (DK)
(72) Inventor: SORENSEN, Jan, DK-5792 rslev (DK)
(74) Representative: Thierry-Carstensen, Ole Jean
(86) International application number: PCT/DK2003/000112
(87) International publication number: WO 2003/070072

(56) References cited:
- DE-A- 2 919 110
- US-A- 5 000 082
- US-A- 5 457 767

## Description

The invention relates to a device for dispensing water in portions, preferably hot water portions in a vending machine for beverages, where the device includes a water container, at least one outlet pipe connecting said water container to the inlet of a pump, a feeding pipe connecting the outlet of the pump to a plurality of dispensing valves, which in turn are connected to said feeding pipe through their respective inlet pipes, where each dispensing valve is adapted to dispense a portion of water through an associated feed nozzle.

### Background Art

Devices of the above type are known.These known devices are often encumbered with the draw-back that they calcify rather quickly and require a decalcification at regular intervals or even a complete or partial replacement.

### Brief Description of the Invention

The object of the invention is to provide a device for dispensing water which significantly reduces the necessity of a decalcification at regular intervals and of a complete or partial replacement.

The device for dispensing water according to the invention is characterised in that the feeding pipe further is connected to a return valve arranged at a level above the fluid level inside the water container, said return valve in turn being connected to a return pipe including an outlet opening discharging into said water container, and that the dispensing valves and the associated inlet pipes and feed nozzles are arranged at a level above the outlet opening in the return pipe of the return valve and are connected to said feeding pipe within a part adjacent said return valve, said part also being arranged at a level above said outlet opening.

When the pump is periodicly or constantly activated it is thus ensured that the temperature inside the feeding pipe is kept above a predetermined level, such as 76°, and that the water is always replaced at least immediately before the vending machine is activated so as to dispense a beverage including a portion of water. When a water portion is dispensed, the return valve is closed and a dispensing valve is opened until the water portion in question has been dispensed. After the dispensing procedure, the pump is stopped and the dispensing valve in question is closed. Subsequently, the return valve is opened and the dispensing valve in question is opened again. As the dispensing valve and the associated feed nozzle as well as the connection thereof with the return valve are all arranged at a level above the outlet opening of the return pipe, the pipe system associated with the water container is automatically emptied due to the difference in pressure between the feed nozzle and said outlet opening. As a result, no water remains in the dispensing valve and the adjacent water channels.Thus, the dispensing valve and the associated water channels are not subjected to a depositing of lime.

It is particularly advantageous when the dispensing valves and the associated feeding pipes and feed nozzles are all arranged in such a manner that the flow direction of the fluid during the dispensing of a water portion everywhere is downward with an inclination differing from 0° and preferably exceeding or being equal to 10° relative to horizontal. In this manner it is additionally ensured that the water returns to the water container after the dispensing of a water portion.

The dispensing valves may according to the invention be mounted on their respective mixing means, where one mixing means and the associated dispensing valve form a unit with the result that it is easy to mount and replace a mixing means together with the associated dispensing valve.

Finally, the dispensing valves may according to the invention advantageously be connected to their respective feed nozzles through an outlet pipe.

### Brief Description of the Drawings

The invention is explained in greater detail below with reference to the accompanying drawing, in which
Figure 1 is a diagrammatic view of a device for dispensing water according to the invention,
Fig. 2 is a vertical, sectional view through a mixing means in form of a unit to be mounted in a vending machine for beverages, and
Fig. 3 is a sectional view on a larger scale of the mixing means of Fig. 2, said sectional view being parallel to the sectional view of Fig. 2 at a plane in front of the plane of Fig. 2 with the result that a dispensing valve associated with the mixing means appears.

### Best Mode for Carrying Out the Invention

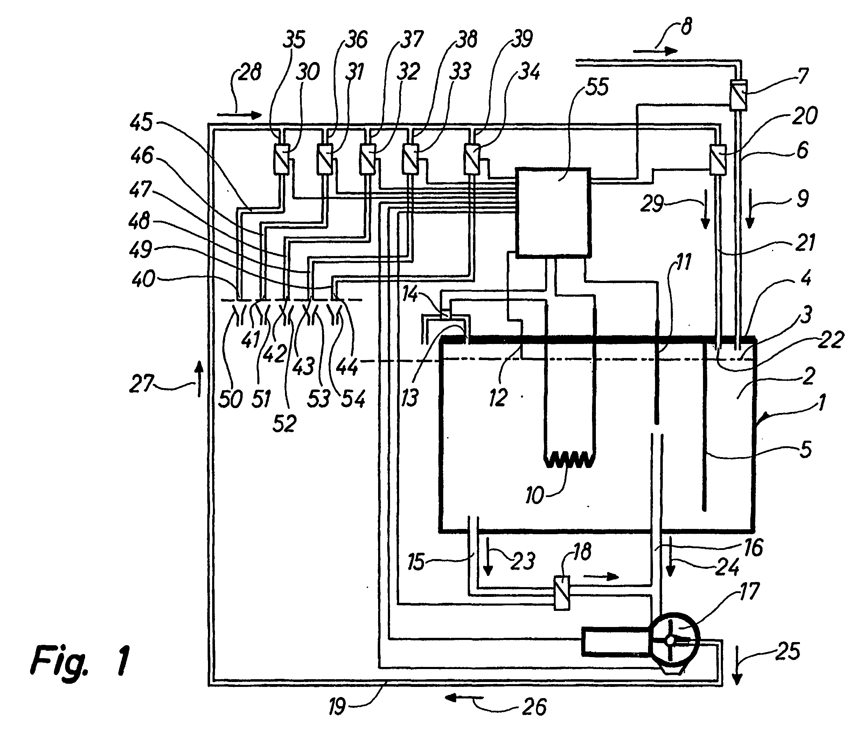

The device for dispensing water shown in Fig. 1 includes a water container designated the general reference numeral 1. This water container 1 is adapted to receive an amount of water 2 up to a level 3 indicated by means of dotted lines. At the top the water container is closed by means of a cover 4, a guide plate 5 extending downwards from said cover 4 to a short distance from the bottom of said water container. To the right of the guide plate 5, cf. Fig. 1, an inlet pipe 6 is provided which opens above the water level 3. From the top this inlet pipe 6 extends through the cover 4, and outside said cover 4 the inlet pipe is provided with a valve 7. Fresh water is fed to the water container 1 through the inlet pipe 6, cf. the arrows 8 and 9.

To the left of the guide plade 5, a heater 10, an electronic temperature sensor 11 and an electronic level sensor 12 are provided inside the water container 1. The cover 14 is furthermore provided with an overflow/vent hole 13 communicating with an electromechanical thermal cutout 14 through a conduit

At the bottom of the water container 1, two outlet pipes 15 and 16 are provided, where the inlets of said two outlet pipes are arranged at their respective heights inside the container. These outlet pipes 15 and 16 are connected to the inlet of a pump 17, a control valve 18 being provided in one of the outlet pipes 15 and 16. The outlet of the pump 17 is connected to a feeding pipe 19, which extends to a return valve 20 placed at a level above the water container 1 and communicating with said water container through a return pipe 21. The return pipe 21 is provided with an outlet opening 22 arranged immediately above the water level 3 on the inner side of the cover 4 and to the right of the guide plate 5.

When the valve 20 is open, the pump 17 can pump water out of the water container 1 and circulate said water as indicated by means of the arrows 23 to 29 so as to return to said water container 1.

A plurality of dispensing valves 30 to 34 are provided at a level above the outlet opening 22 of the return pipe 21. The present embodiment includes five dispensing valves 30 to 34, but the number of valves can vary from one valve to several valves as required in the vending machine for beverages in question. The individual dispensing valves 30 to 34 are all connected to the feeding pipe 19 through their respective inlet pipes 35 to 39 and furthermore to their respective feed nozzles or feed openings 40 to 44 through their respective outlet pipes 45 to 49.

All the openings of the feed nozzles 40 to 44 are arranged at a level above the outlet opening 22 of the return pipe 21 and in connection with their respective mixing funnels 50 to 54.

All the above valves as well as the temperature sensor 11, the heater 10, the level sensor 12 and the thermo cutout 14 are connected to a control member 55 by means of suitable conduits as indicated.

When the device for dispensing water shown in Fig. 1 is used, tap water is fed to the water container 1 through the valve 7 in such a manner that the water level 3 is constantly controlled by the level sensor 12. The entering tap water is guided from the top of the water container and downwards into the bottom thereof by means of the guide plate 5 in such a manner that the cold water entering the portion of the water container 1 with the heater 10 enters at the bottom and is mixed with the comparatively warmer water therein from below and upwards. The water temperature is measured by means of the temperature sensor 11 and heated by means of the heater 10 until the desired, nominal operating temperature has been reached, viz. approximately 97°C. The position of the heater 10 in the water implies that the temperature below the heater 10 is lower than above and at the level of said heater 10. This difference in the water temperature is utilized by means of the valve 18 and the outlet pipes 15 and 16 so as to ensure that the dispensing valves 30 to 34 are supplied with water by means of the pump 17 at a lower temperature than said nominal operating temperature.

Security against dry boiling, viz. in case no water is fed, is obtained by the control members 55 being adapted to only allow a heating by means of the heater 10 when the water level is at the desired height inside the water container 1. Security against boiling over is also obtained, viz. in case too much water is fed or in case the heater 10 is permanently activated, because the electromechanical thermo cutout 14 interrupts the current to the heater 10 when water flows out of the water container through the overflow/vent hole 13.

When water of a specific, relatively high operating temperature is desired in one or more of the mixing funnels 50 to 54, the pump 17 is started and the return valve 20 is simultaneously opened. The control valve 18 is kept closed, said control valve 18 being provided in the outlet pipe 15 communicating with the interior of the water container 1 adjacent the bottom of said container. Subsequently, water flows through the feeding pipe 19, the return valve 20 and the return pipe 21 from the water container and back again to said water container through the second outlet pipe 16 which extends to a level above the heater 10 inside said water container 1. The latter flow takes place within a relatively short period, viz. approximately 2 sec. As a result it is ensured that the desired operating temperature applies throughout the vending machine and that possible air bubbles are removed from the entire pipe system.

Subsequently, when the return valve 20 is closed and one or more of the dispensing valves 30 to 34 are opened, a desired portion of water is delivered to the mixing funnel(s) 50 to 54 in question. When the desired portion of water has been delivered either versus the time or by counting the pulses (IMP) from the pump, the dispensing valve(s) 30 to 34 used is/are closed while the pump 17 is simultaneously stopped. When the pump 17 and consequently also the water flow through the feeding pipe 19 has been stopped, the dispensing valve(s) 30 to 34 just used is/are opened again for a short period of time at the same time as the return valve 20 is opened. As the pipes surrounding the dispensing valves 30 to 34 in question and the return valve 20 are filled with water, and as the outlet opening 22 of the return pipe 21 is at the lowest level, all the pipes and valves in question are drained with respect to the water flowing back to the water container 1. As a result it is ensured that no water is left in the pipes and valves in question, and consequently no lime can deposit therein. In addition it is ensured that water cannot drip or leak out of the dispensing valves 30 to 34 to the mixing funnels 50 to 54.

When water is requested which must have a lower temperature than the above nominal operating temperature, the same procedure is followed apart from the fact that water is allowed to flow through the outlet pipe 15 by means of the control valve 18. A suitable control of the valve 18 ensures the desired lower water temperature.

The device for dispensing water according to the invention renders it possible to obtain more advantages than the conventional devices where the water flow is usually caused to flow exclusively by way of the gravity. The water in the device according to the invention is caused to flow by means of the pump to the use location(s) at a considerably higher speed than the water in the known devices. When the dispensing valves leak, the water is prevented from unintentionally flowing to the mixing funnels. As the dispensing valves are arranged adjacent the use location, a relatively accurate control of the temperature of the tap water is ensured at said use location. When it is a question of a vending machine for hot beverages, the water container can be arranged at a highly advantageous location, viz. at a comparatively lower level inside the vending machine.

In order to ensure that pure water is always available in the pipes and that the temperature therein is kept above a suitably high temperature, such as for instance approximately 76°, the pump can be activated at suitable intervals while the return valve 20 is open.

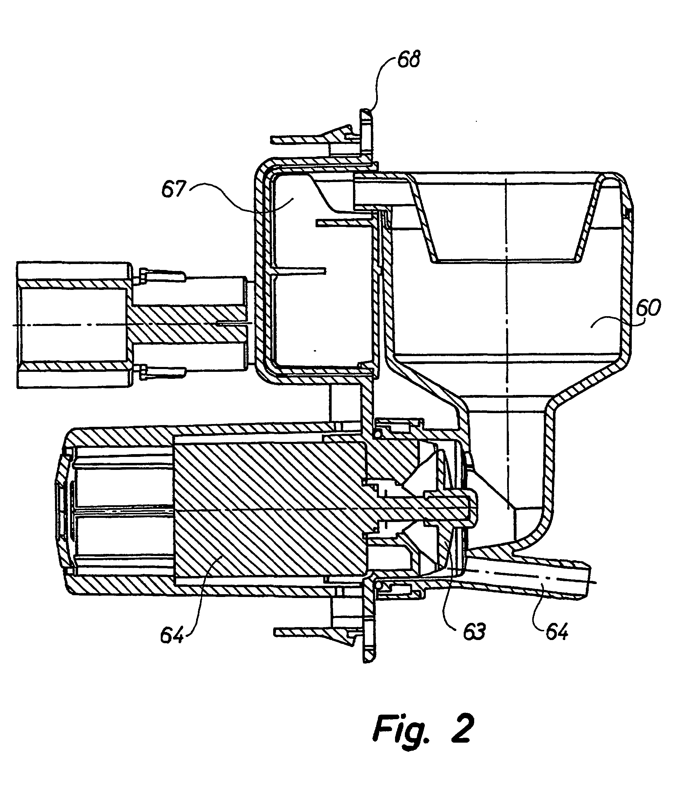

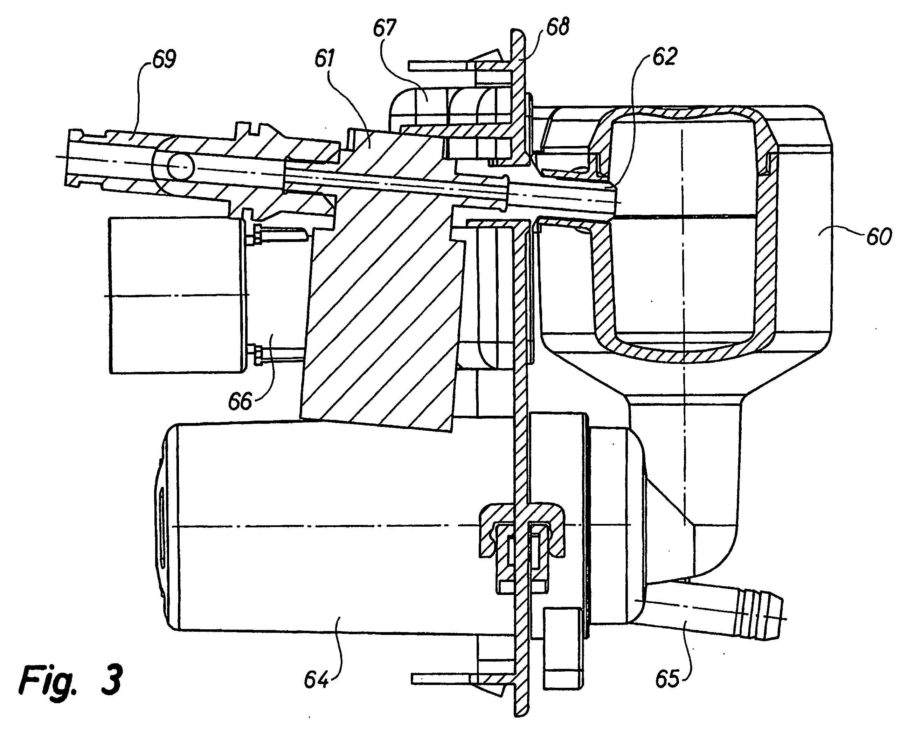

Figs. 2 and 3 show a mixing means in form of a unit This mixing means includes a mixing funnel 60 which is supplied from the top with a suitable quantity of powder for the preparation of the beverage in question in a conventionally known manner. A dispensing valve 61 is mounted in connection with this mixing funnel 60. The dispensing valve 61 includes an outlet valve 61 with a feed nozzle 62, cf. Fig. 3, arranged in such a manner that the water portion supplied through the dispensing valve 61 is guided tangentially into the mixing funnel 60. The mixture of water and powder flows out of the funnel 60 and downwards into a whipping wheel 63 driven by means of a motor 64 and ensuring the desired mixing of water and powder. Subsequently, the whipped beverage is carried forward to a dispensing location through an outlet 65. Powder dust, if any, from the mixing funnel 60 is sucked out through a powder trap 67 by means of a pump in a conventionally known manner. The individual parts are mounted on a common unit plate 68. Each unit can be easily mounted as an assembled unit in a vending machine for beverages and be connected to various pipes by means of stubs as well as be secured by means of suitable fastening means not shown.

As illustrated in Fig. 3, the dispensing valve 61 and the associated inlet stub 69 as well as the feed nozzle 62 are arranged in such an inclined position, viz. approximately 10°relative to horizontal, that the passing water portion flows obliquely downwards everywhere during the dispensing procedure. The same applies to parts not shown of feeding pipes connected thereto with the result that stagnant water is left nowhere in these pipes, and accordingly no lime can deposit in said pipes. The inclination ensures furthermore that the channels in question are efficiently drained without air being caused to enter together with the water.

The invention has been described with reference to preferred embodiments. Many modifications can be carried out without thereby deviating from the scope of the invention as defined by the appended claims. The water can for instance be returned to the water container 1 through other channels than the channels shown to the right of the guide plate 5.

## Claims

1. A device for dispensing water in portions, preferably hot water portions in a vending machine for beverages, where the device includes a water container (1), at least one outlet pipe (15, 16) connecting said water container (1) to the inlet of a pump (17), a feeding pipe (19) connecting the outlet of the pump (17) to a plurality of dispensing valves (30 to 34), which in turn are connected to said feeding pipe (19) through their respective inlet pipes (35 to 39), where each dispensing valve is adapted to dispense a portion of water through an associated feed nozzle (40 to 44, 62), **characterised in, that** the feeding pipe (19) further is connected to a return valve (20) arranged at a level above the fluid level inside the water container (1), said return valve in turn being connected to a return pipe (21) including an outlet opening (22) discharging into said water container (1), and that the dispensing valves (30 to 34, 61) and the associated inlet pipes (35 to 39) and feed nozzles (40 to 44, 62) are arranged at a level above the outlet opening (22) in the return pipe (21) of the return valve (20) and are connected to said feeding pipe (19) within a part adjacent said return valve (20), said part also being arranged at a level above said outlet opening (22).

2. A device according to claim 1, **characterised in, that** all the dispensing valves (30, 34, 6 1) and the associated inlet pipes (35 to 39) and feed nozzles (40 to 44, 62) are arranged in such a manner that the flow direction of the fluid during the dispensing of a water portion everywhere is downward with an inclination differing from 0 ° and preferably exceeding or being equal to 10° relative to horizontal.

3. A device according to claim 1 or 2, **characterised in, that** the dispensing valves (30 to 34, 61) are mounted on their respective mixing means, where one mixing means and the associated dispensing valve form a unit

4. A device according to claim 1, 2 or 3, **characterised in, that** the dispensing valves (30 to 34, 61) are connected to their respective feed nozzles (40 to 44, 62) through an outlet pipe (46, 49).

## Patentansprüche

1. Vorrichtung zum Ausgeben von Wasser in Portionen, vorzugsweise Heißwasser-Portionen in einem Getränkeautomaten, wobei die Vorrichtung aufweist: einen Wasserbehälter (1), mindestens eine Auslassleitung (15,16), die den Wasserbehälter (1) mit dem Einlass einer Pumpe (17) verbindet, eine Zuführleitung (19), die den Auslass der Pumpe (17) mit mehreren Ausgabeventilen (30 bis 34) verbindet, welche wiederum über ihre jeweiligen Einlassleitungen (35 bis 39) mit der Zuführleitung (19) verbunden sind, wobei jedes Abgabeventil zum Ausgeben einer Portion Wasser durch eine zugeordnete Zuführdüse (40 bis 44, 62) vorgesehen ist,
**dadurch gekennzeichnet, dass**
die Zuführleitung (19) ferner mit einem in einer Höhe über dem Flüssigkeitspegel in dem Wasserbehälter (1) angeordneten Rückschlagventil (20) verbunden ist, das wiederum mit einer Rücklaufleitung (21) mit einer Auslassöffnung (22), die in den Wasserbehälter (1) mündet, verbunden ist, und die Ausgabeventile (30 bis 34, 61) und die diesen zugeordneten Einlassleitungen (35 bis 39) und Zuführdüsen (40 bis 44, 62) in einer Höhe über der Auslassöffnung (22) in der Rücklaufleitung (21) des Rückschlagventils (20) angeordnet und mit der Zuführleitung (19) innerhalb eines dem Rückschlagventil (20) benachbarten Teils verbunden sind, der ebenfalls in einer Höhe über der Auslassöffnung (22) angeordnet ist.

2. Vorrichtung nach Anspruch 1, **dadurch gekennzeichnet, dass** sämtliche Ausgabeventile (30,34,61) und die diesen zugeordneten Einlassleitungen (35 bis 39) und Zuführdüsen (40 bis 44, 62) derart angeordnet sind, dass die Strömungsrichtung der Flüssigkeit beim Ausgeben einer Wasserportion überall mit einer anderen Neigung als 0° und vorzugsweise einer Neigung, die größer oder gleich 10° relativ zu der Horizontalen ist, abwärts gerichtet ist.

3. Vorrichtung nach Anspruch 1 oder 2, **dadurch gekennzeichnet, dass** die Ausgabeventile (30 bis 34, 61) an ihren jeweiligen Mischeinrichtungen angebracht sind, wobei eine Mischeinrichtung und das dieser zugeordnete Ausgabeventil eine Einheit bilden.

4. Vorrichtung nach Anspruch 1, 2 oder 3, **dadurch gekennzeichnet, dass** die Ausgabeventile (30 bis 34, 61) über eine Auslassleitung (46,49) mit ihren jeweiligen Zuführdüsen (40 bis 44, 62) verbunden sind.

## Revendications

1. Dispositif de distribution d'eau en portions, de préférence des portions d'eau chaude dans un distributeur de boissons où le dispositif comprend un conteneur d'eau (1), au moins une conduite de sortie (15, 16) raccordant ledit conteneur d'eau (1) à l'entrée d'une pompe (17), une conduite d'alimentation (19) raccordant la sortie de la pompe (17) à une pluralité de valves distributrices (30 à 34), qui en retour sont raccordées à ladite conduite d'alimentation (19) par leurs conduites d'entrée respectives (35 à 39) où chaque valve distributrice est adaptée pour distribuer une portion d'eau par un embout d'alimentation associé (40 à 44, 62), **caractérisé en ce que** la conduite d'alimentation (19) est en outre raccordée à une valve de retour (20) aménagée à un niveau au-dessus du niveau de liquide à l'intérieur du conteneur d'eau (1), ladite valve de retour étant à son tour raccordée à une conduite de retour (21) comprenant une ouverture de sortie (22) débouchant dans ledit conteneur d'eau (1) et **en ce que** les valves distributrices (30 à 34, 61) et les conduites d'entrée associées (35 à 39) et les embouts d'alimentation (40 à 44, 62) sont aménagés à un niveau au-dessus de l'ouverture de sortie (22) dans la conduite de retour (21) de la valve de retour (20) et sont raccordés à ladite conduite d'alimentation (19) à l'intérieur d'une pièce adjacente à ladite valve de retour (20), ladite pièce étant également aménagée à un niveau au-dessus de ladite ouverture de sortie (22).

2. Dispositif selon la revendication 1, **caractérisé en ce que** toutes les valves distributrices (30, 34, 61) et les conduites d'entrée associées (35 à 39) et les embouts d'alimentation (40 à 44, 62) sont aménagés de façon à ce que le sens du flux du liquide durant la distribution d'une portion d'eau est partout orienté vers le bas avec une inclinaison différente de 0° et de préférence supérieure ou égale à 10° par rapport à l'horizontale.

3. Dispositif selon la revendication 1 ou 2, **caractérisé en ce que** les valves distributrices (30 à 34, 61) sont montées sur leurs moyens de mélange respectifs, où un moyen de mélange et la valve distributrice associée forment une unité.

4. Dispositif selon la revendication 1, 2 ou 3 **caractérisé en ce que** les valves distributrices (30 à 34, 61) sont raccordées à leurs embouts d'alimentation respectifs (40 à 44, 62) à travers une conduite de sortie (46, 49).
